# EUROPEAN PATENT APPLICATION

(11) **EP 1 912 126 A1**
(43) Date of publication of application: **16.04.2008**
(21) Application number: 06021326.1
(22) Date of filing: 11.10.2006
(51) Int. Cl.: G06F 17/24

(54) **Computer-based device for generating multilanguage threat descriptions concerning computer threats**

(71) Applicant: Avira GmbH, 88069 Tettnang (DE)
(72) Inventor: Auerbach, Oliver, 88069 Tettnang (DE)
(74) Representative: Hübner, Gerd

(57) **Abstract**

A Computer-based device for generating multilanguage threat descriptions concerning computer threats like phishing and malware including viruses, worms, trojans, adware, spyware and other security-related risks comprises a database (2) storing data as templates (7, 8, 9) and objects (10) relevant for the threat description, an interaction portion (3) including output means (5) for displaying said templates (7, 8, 9) and objects (10) and further including input means (6) for selecting and completing said templates (7, 8, 9) and objects (10) by an administrator, and a script portion (4) generating a readable output from said completed templates (7, 8, 9) and objects (10) in at least one specific language.

## Description

The invention refers to a computer-based device for generating multilanguage threat descriptions concerning computer threats like phishing and malware including viruses, worms, trojans, adware, spyware and other security-related risks.

To counteract aforesaid security-related risks for computer users it is common that especially antivirus product vendors prepare and publish detailed threat descriptions providing computer users with updated information about oncoming attacks e.g. via the internet by phishing and malware. A typical scenario is that a new threat slips through an antivirus product undetected and penetrates into a computer user's environment. The user submits the sample to its antivirus vendor for analyses. There it can take many hours for the antivirus vendor to provide a response, as it requires a significant effort to create according threat descriptions.

After the aforesaid analyses the antivirus vendor may role out definitions to update his antivirus product and provides the customer with an according threat description. To write such description from the beginning over and over again is a time consuming procedure.

Another problem arises after finalizing a description as the same might have to be translated into different languages. This entails extra expenses and efforts wherein the highest costs are in fact caused by the amount of time necessary for the translations, since such descriptions are somehow critical to translate into another language. Moreover, the time loss for preparing the translations is problematic, as such a threat description should be delivered to computer users as soon as possible to avoid further damage to their computer systems.

It is an object of the invention to provide a computer-based device for generating multilanguage threat descriptions concerning computer threats in an efficient and time saving manner.

This object is achieved by a computer-based device comprising the characterizing features of claim 1. Accordingly the device has a structure comprising a database storing data as templates and objects relevant for the threat description, an interaction portion including output means for displaying said templates and objects and further including input means for selecting and completing said templates and objects by an administrator, and a script portion generating a readable output from said completed templates and objects in at least one specific language.

Due to this basic structure the invention is able to create detailed descriptions by means of an intelligent and dynamically extensible template system. As can be seen in the following by means of a careful template design various details as concerns threat description can be addressed to. The main advantage is the fact that due to the script portion a readable output can be generated from completed templates and objects in at least one specific language and preferable in each desired language implemented in the system. In as much multilingual descriptions become available in real time and with no relevant time delay.

Preferred embodiments of the invention are reflected in the depending claims, the features and advantages of which are discussed in detail in the following description of an embodiment of the invention. In the drawings
- Fig. 1: is a basic sketch reflecting the structure of the computer-based device for generating multilanguage threat descriptions,
- Fig. 2: is a hierarchical diagram showing the different kinds of templates and objects used,
- Fig. 3: is a flow diagram showing the generation of a template in the interaction portion of the device,
- Fig. 4: is a flow diagram showing the script portion generating the readable output from templates and objects generated according to Fig. 3,
- Fig. 5: is a display scheme presented by the output means for the completion of a template,
- Fig. 6: reflects an internal output of a part of a threat description presented by the output means of the interaction portion and
- Fig. 7: show two threat descriptions as presented on a web page in English and German language as they are based on the completed templates and objects shown in Fig. 6.

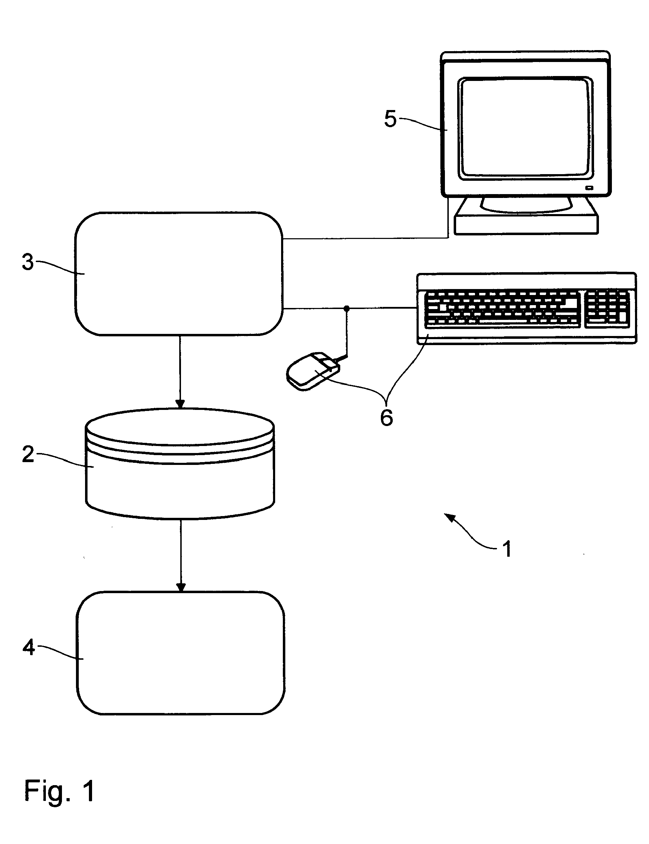

Referring to Fig. 1 the computer-based device 1 comprises three main portions, which are a database 2, an interaction portion 3 and a script portion 4.

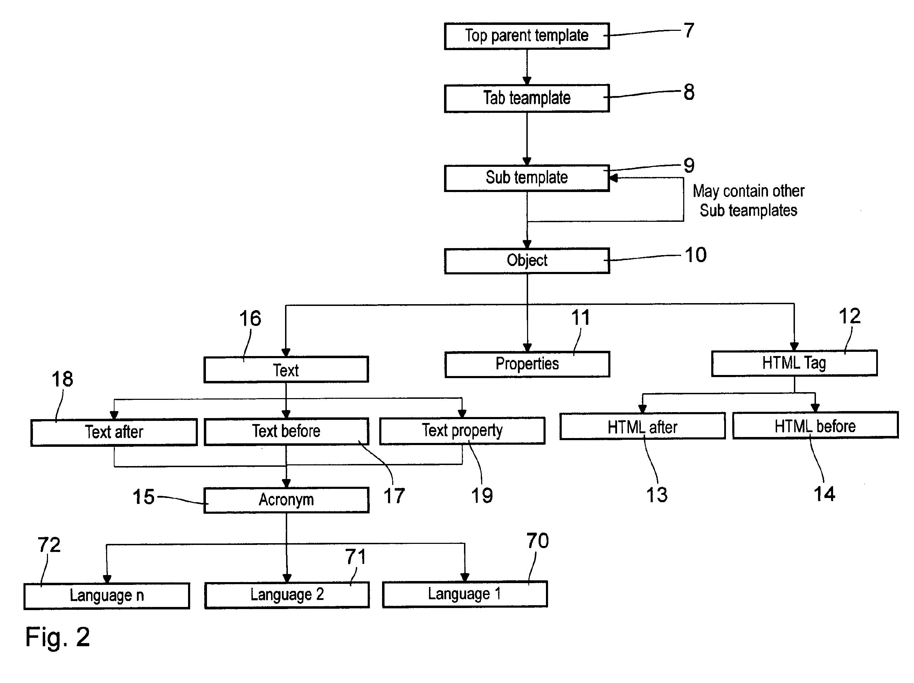

In the database 2 all data relevant for the generation of threat descriptions are stored, which include templates and objects explained in detail in connection with Fig. 2. The interaction portion 3 is a kind of administration area at the back-end of e.g. an antivirus vendor, where the generation of multilanguage threat descriptions are initiated due to a threat warning and sample received by a computer user. The interaction portion 3 includes output means 5 for displaying the mentioned templates and objects and further includes input means 6 like a keyboard and mouse for selecting and completing the mentioned templates and objects by an administrator.

The script portion generates a readable output from said completed templates and object in at least one specific language.

As can be seen from Fig. 2 three kinds of templates are used in a hierarchical system and linked with each other. These templates are the top parent template 7, the subsidiary tab template 8 and the sub templates 9. Each sub template 9 can include more sub templates down to multiple levels.

The top parent template 7 is a template to decide on the general function of a threat and could be associated to a phishing threat event, a malware threat event or even something else. Since a phishing description is completely different from a malware description this uppermost leveled top parent template distinguishes between two split separate routine paths.

Under the top parent template 7 for malware threats several tab templates 8 like "e-mail distribution", "network distribution" or "file activity" are included. Depending on the behavior of a malware according data is inserted either in one, the other or even more of these tab templates. For example most of the malware drop a copy of themselves in the % sysdir % directory regardless if they are an e-mail or network threat. In this case the "file activity" template of the tab templates 8 will be used for most malware and the other templates only for specific behavior.

In some cases there is the need for the duplication of specific resources. For example when a malware displays a picture it is recommendable to include same in the description. In case that it is unknown how many different pictures will have to be displayed a dynamic template can be used that allows to duplicate the embedded objects multiple times.

The main purpose of the sub template 9 is to host objects 10 as can be seen from Fig. 2.

The objects reflect specific items like "select field", "input field", "check box", "text area" and "option" which is a sub object of the "select field" object. Two more objects named "label" and "link" are available as well but are not used for the generation of the threat description itself.

The main purpose of objects 10 is to store values which describe the threat properties. Those values depend on the object 10 itself. E.g. a "check box" can have "true" or "false" as value while the value of an object "text area" or "input field" is the inserted text or parameter itself. The object "select field" is different in as much as its content is either "false" or one of the "options" that are available as subsidiary value.

As can be seen as next hierarchic level of the objects 10 the value of each such object 10 has various properties 11 that are used for different issues. Some of them are used in the interaction portion 3, i.e. at the back-end of the system only and include information about the size or the appearance within this back-end area. An example would be the width of an "input field". This property 11 is only visible in the back-end when inserting the content of the "input field", but it is not relevant for the output of the threat description itself.

Other properties 10 are relevant for the output itself, for example the property "list like" is used to display a listing character like a dot in front of each line of a "text area" output. Another example is the "list like once" property which, being set to true, provides for a dot to be displayed only in front of the first line of a text field.

Another subsidiary object design means are HTML tags 12 in order to display the description in a web page compatible format. They are used to insert new lines, bold some text or just display a special character. By the sub tags "HTML after" 13 and "HTML before" 14 further means to configure the appearance of the description are given.

Finally - as can also be seen in Fig. 2 - each object 10 may have up to three kinds of acronyms 15 which are "text" 16, "text before" 17, "text after" 18 and "text properties" 19. These acronyms 15 are translated in the corresponding language 70, 71, 72 later. Given an example where a check box is set to true and the "text" acronym 16 is set, the correct output in the corresponding language will be made. However, the "text area" and "input field" objects 10 do not have the "text" acronym 16 as their value itself already is the aforementioned.

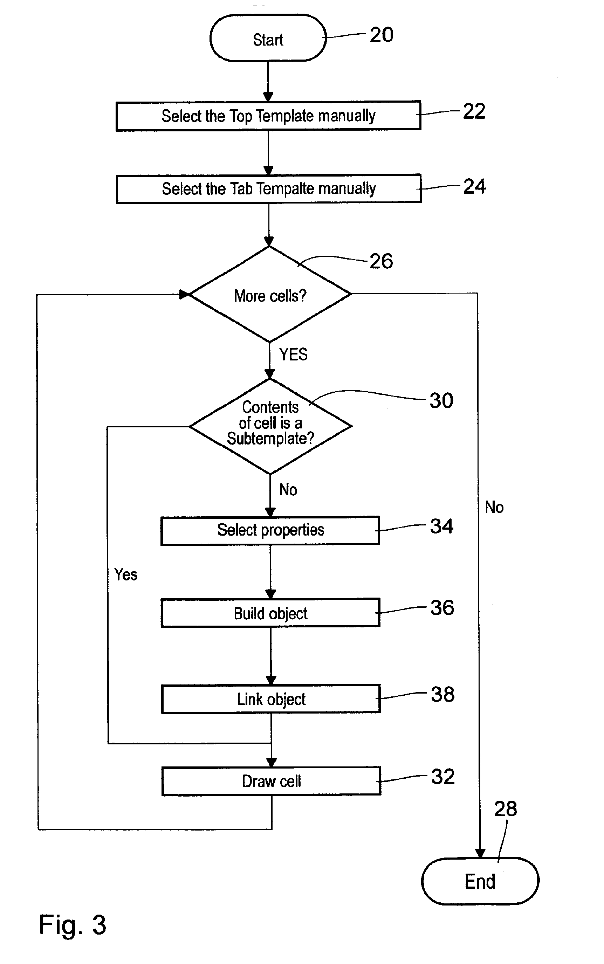

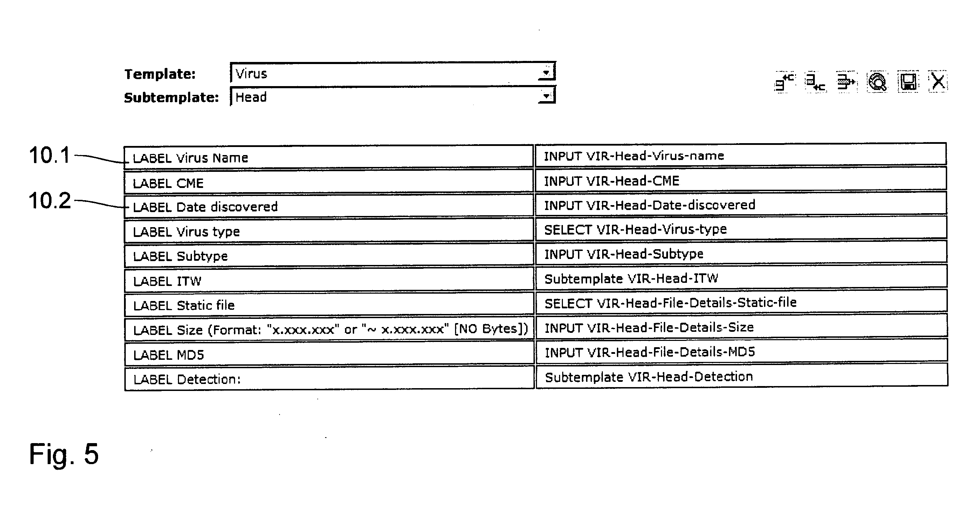

Referring now to Fig. 3 the way how to construct a contemplate in the interaction portion 3 by action of an administrator at the back-end of the device can be explained. The display presented to the administrator in this connection is reflected in Fig. 5.

Turning back to Fig. 3 outgoing from step 20 "start" in the successive steps 22 and 24 the top template and tab template are selected manually. A query 26 follows whether or not the template should include more cells. If no the end 28 of the routine is reached.

If yes in a following query 30 the device checks whether the contents of the further cell is a sub template. If yes the sub template is drawn to this cell in step 32 and the process returns to step 26.

If query 30 is answered with no the process continues to step 34 for selecting one of the properties 11, after which the object is built in step 36 and linked in step 38. The according object is drawn as cell in step 32 and the process returns to query 26 and so on.

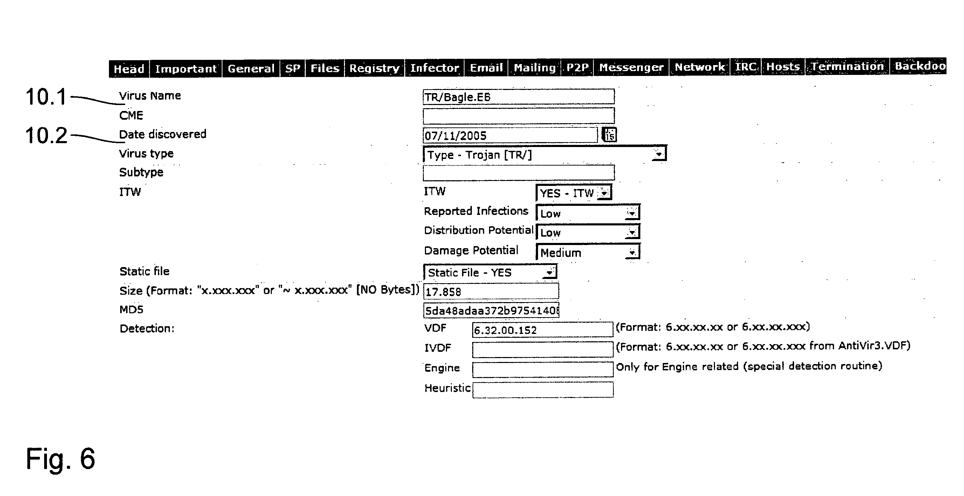

After having reached the end step 28 the output means 5 of the interaction portion displays an internal output of the templates and objects, built according to Fig. 3, which is shown in Fig. 6. It includes e.g. the information "virus name" incorporated by the object 10.1 "label virus name" of Fig. 5 or the information "date discovered" by selecting the object 10.2 "label date discovered" of Fig. 5. The value of "virus name" is "TR/bagle.EB" and the date discovered is "07111/2005" as value.

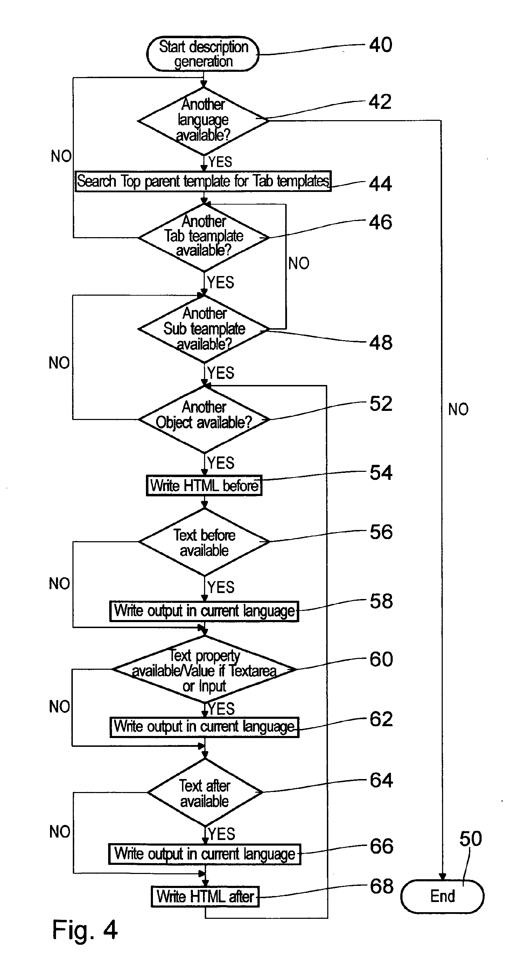

In case the displayed threat description as can be seen in Fig. 6 is validated as correct the script portion 4 can prepare the actual threat description, as is shown in the flow diagram of Fig. 4.

A start step 40 initiates the generation of the description and leads to a query 42 whether or not another language is available. At the first time one language like English is available and the process proceeds to step 44 which searches the top parent template for existing tab templates. In case in query 46 another tab template is available the next query 48 checks whether another sub template is available. If no tab template is available the process returns to query 42 asking for another available language. If no the process returns to end 50.

During a regular threat description query 48 is answered with yes and further query 52 for further available objects is also positive. The process proceeds to step 54 in which the HTML tag "HTML before" is written.

The following query 56 checks whether or not "text before" is available. If yes an according output is written in the current language in step 58.

A query 60 checks whether any text with according properties and values in case of text areas or input fields is available. If yes the process proceeds to step 62 in which the according text with a layout given by the text properties and values is written in the current language.

The next query 64 checks whether a "text after" is available. If yes this text is written into the threat description in the current language 66.

In the next step 68 the HTML tag "HTML after" is written and the process returns to step 52.

In case that no further objects are available according to query 52 the process returns to query 48 which returns the process to query 46 if no other sub template is available. In case that no further tab template is available query 46 returns the process to query 42 which checks if another language, e.g. German is available. If yes the whole routine down to step 68 is repeated leading to a threat description in German language automatically.

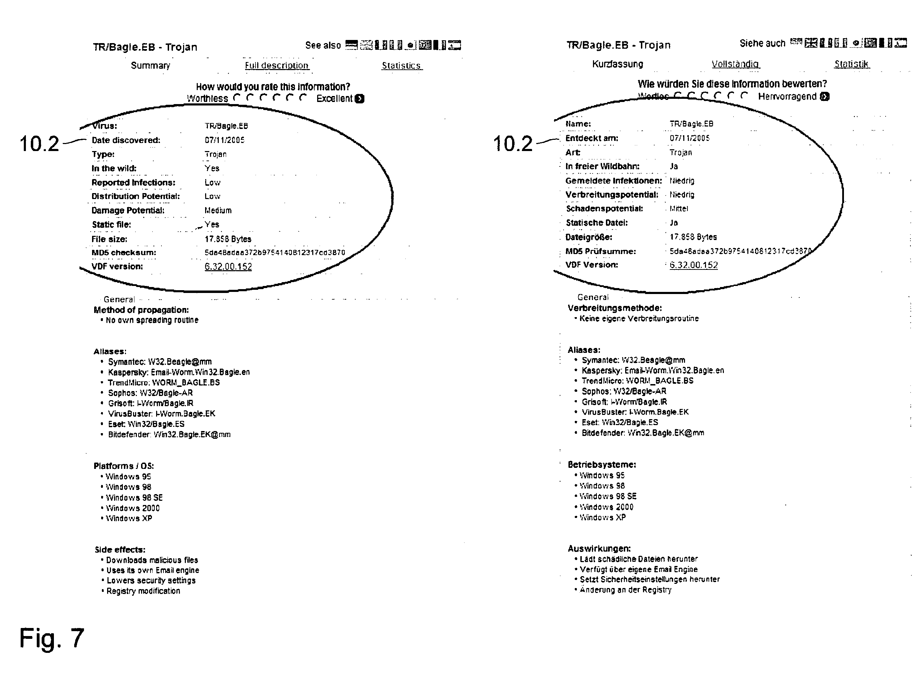

The threat descriptions both in English and German language thus generated are shown in Fig. 7 as they can be viewed on the web page of the virus vendor. The part defined by an oval line is the output of the template shown in Fig. 6. As can easily be seen the label fields can be automatically translated into the according language, like "Date discovered" in the English version to "Entdeckt am" in the German version. Both input fields show the date of discovery "07/11/2005" which had to be entered only once.

## Claims

1. Computer-based device for generating multilanguage threat descriptions concerning computer threats like phishing and malware including viruses, worms, trojans, adware, spyware and other security-related risks, **characterized by** a structure comprising
- a database (2) storing data as templates (7, 8, 9) and objects (10) relevant for the threat description,
- an interaction portion (3) including output means (5) for displaying said templates (7, 8, 9) and objects (10) and further including input means (6) for selecting and completing said templates (7, 8, 9) and objects (10) by an administrator, and
- a script portion (4) generating a readable output from said completed templates (7, 8, 9) and objects (10) in at least one specific language.

2. Device according to claim 1, **characterized in that** the templates are organized in hierarchical order comprising
- top parent templates (7) reflecting the basic character of a threat,
- tab templates (8) reflecting specific behaviour of a threat, and
- sub templates (9) hosting objects (10) which store values depending on the object (10) and reflecting details of the threat.

3. Device according to claim 1 or 2, **characterized in that** the objects (10) comprise text objects (16, 17, 18), property objects (11) and HTML tag objects (12).

4. Device according to claim 3, **characterized in that** the text objects (16, 17, 18) comprise three kinds of acronyms (15) which are "Text"", "Text before" and "Text after".

5. Device according to claim 3 or 4, **characterized in that** the text objects (16, 17, 18) comprise a data base (2) for at least one language to translate the threat description generated on the basis of said completed templates (7, 8, 9) and objects (10).

6. Device according to one of aforesaid claims, **characterized in that** in the interaction portion (3) the output means (5) present the templates (7, 8, 9) and objects (10) to the administrator in a hierarchical order and run branched querries to build up a completed template.

7. Device according to one of aforesaid claims, **characterized in that** the completed template (7, 8, 9) is displayed to the administrator at the interaction portion (3) in an internal short version.

8. Device according to one of aforesaid claims, **characterized in that** the script portion (4) generates a readable threat description in at least one language by successively working through completed templates (7, 8, 9) and objects (10).
